# EUROPÄISCHE PATENTSCHRIFT

(11) **EP 0 951 630 B1**
(45) Veröffentlichungstag und Bekanntmachung des Hinweises auf die Patenterteilung: **06.03.2002**
(21) Anmeldenummer: 97952793.4
(22) Anmeldetag: 21.11.1997
(51) Int. Cl.: F24F 13/18, F24F 12/00, E06B 9/17

(54) **RAUMBELÜFTUNGSVERFAHREN UND VORRICHTUNG ZUR DURCHFÜHRUNG DES VERFAHRENS**
METHOD FOR VENTILATING A ROOM AND DEVICE FOR CARRYING OUT THE METHOD
PROCEDE D'AERATION D'UN LOCAL ET DISPOSITIF POUR METTRE EN OEUVRE LEDIT PROCEDE

(30) Priorität: 30.12.1996 DE 19654704
(43) Veröffentlichungstag der Anmeldung: 27.10.1999
(73) Patentinhaber: Föckersperger, Walter, 84149 Eberspoint Velden (DE)
(72) Erfinder: Föckersperger, Walter, 84149 Eberspoint Velden (DE)
(74) Vertreter: Winter, Brandl & Partner
(86) Internationale Anmeldenummer: EP9706519
(87) Internationale Veröffentlichungsnummer: WO9829697

(56) Entgegenhaltungen:
- DE-A- 2 813 008
- DE-A- 3 217 468
- DE-A- 4 435 064
- DE-A- 19 534 843

## Beschreibung

Die vorliegende Erfindung bezieht sich auf ein Verfahren zur Belüftung eines Raums, insbesondere zur kontrollierten Einzelwohnraumbelüftung, und eine Vorrichtung zur Durchführung dieses Verfahrens.

Bei Räumen jeder Art muß für einen ausreichenden Luftaustausch gesorgt werden, um in den Räumen ein angenehmes und gesundes Klima zu schaffen. Die Belüftung der Räume kann auf verschiedene Arten und Weisen erfolgen. In der Raumlufttechnik wird nach Einrichtungen zur freien Lüftung und nach raumlufttechnischen Anlagen unterschieden.

Bei der freien Lüftung erfolgt die Förderung der Luft ausschließlich durch Druckunterschiede infolge Windanfall und/oder Temperaturdifferenz zwischen innen und außen. Einrichtungen zur freien Lüftung sind beispielsweise Fenster, Schächte, Dachaufsätze und kann auch durch Ventilatoren verstärkt werden. Die Belüftung von Räumen erfolgt beispielsweise durch das Öffnen von Fenstern oder Türen; diese unkontrollierte Lüftung der Räume führt jedoch gerade in der kalten Jahreszeit zu erheblichen Wärmeverlusten.

Bei den raumluftechnischen Anlagen liegt eine maschinelle Förderung vor, wobei die Luftversorgung von Gebäuderäumen sowie die Entsorgung verbrauchter Luft dabei die raumlufttechnische Anlage übernimmt. Eine raumlufttechnische Anlage besteht im allgemeinen aus einem Zentralgerät für eine Zentralbelüftung oder einem Raumgerät für eine Einzelraumbelüftung. Ferner bestehen derartige Anlagen meist aus einem Kanalnetz mit Luftdurchlässen im Raum und nach außen, Leitungen für Wärme-, Kälte- und Stromversorgung, Schalt, Steuer- und Regeleinrichtungen.

Im Fall der Zentralbelüftung befindet sich in einem Gebäude, beispielsweise im Keller oder im Dachgeschoß,. eine Zentrallüftungsanlage. Von der Zentallüftungsanlage ausgehend erstrecken sich durch das Gebäude in die verschiedenen zu belüftenden Räume Luftkanäle bzw. Lüftungsleitungen. Dies führt meist zu einem Leitungssystem mit sehr langen Versorgungsleitungen, wobei die Durchmesser der Rohrleitungen nach den Gesichtspunkten der erforderlichen Luftgeschwindigkeit konzipiert werden und daher je nach Größe des Durchmessers oftmals aufwendige Wand-, Mauer- oder Deckendurchbrüche notwendig sind, was insbesondere bei einer Installation in Altbauten zu großen Problemen führt. Da sich ferner diese langen und weit verzweigten Rohrleitungen - die auch nur mit erheblichem Energieverlust arbeiten - oftmals nicht an allen Stellen optimal reinigen lassen, können sich im Rohrleitungssystem leicht Bakterien einnisten. Daher sind wiederum teure und aufwendige Filteranlagen notwendig, um eine bestimmte Luftqualität zu erzeugen.

Weitere Nachteile des Zentrallüftungssystem sind die Vorhaltung des Drucks im Leitungssystem während der gesamten Betriebszeit (was zu einem höheren Energieaufwand, einer zusätzlichen Schalleistung sowie zu Leckagen führen kann), hohe Rohrreibungsverluste bei langen Rohrleitungen sowie der zusätzliche apparative Mehraufwand für die bereichsweise Schaltung der Anlage und für die bereichsweise unterschiedliche Raumluftkonditionen.

Die Einzelraumbelüftung schafft im Hinblick auf die vorstehend genannten Nachteile oder Probleme teilweise eine Verbesserung. Wie vorstehend bereits erwähnt weist eine Anlage zur Einzelraumbelüftung ein Raumgerät auf. Die Raumgeräte wie Schrank-, Truhen, Ventilatorkonvektor-, Deckengeräte sind dabei luft- und warmwasser- sowie elektroseitig zentral anzuschließen. Vorteile einer solchen Anlage sind niedrigere Energiekosten und die örtliche Bedienung sowie kein langes oder verzweigtes Leitungssystem mit großen Rohrleitungsdurchmessern. Nachteile sind dagegen schlechte Redundanz, die Durchführung von Wartungs- und Reparaturarbeiten vor Ort, niedrige Ventilatorwirkungsgrade sowie Raumbedarf im Raum oder Nutzraum. Daneben sind die derzeit auf dem Markt angebotenen Einzelraumlüftungen, wie auch das Zentrallüftungssystem, relativ laut und verhältnismäßig teuer. Außerdem erfordern herkömmliche Einzelraum-Belüftungssysteme häufig größere Veränderungen an der Außenfassade.

Ferner haben derartige Raumgeräte einen schlechten Wärmerückgewinnungswirkungsgrad, weshalb in Gebäuden daher meistens Zentrallüftungsgeräte mit einer Wärmerückgewinnungsanlage installiert werden, die jedoch wiederum die vorstehend aufgeführten Nachteile mit sich bringt.

Ein weiterer Gesichtspunkt, der neben der Raumbelüftung bei der Auslegung eines Gebäudes beachtet werden muß, ist der Energieverlust an Gebäudewänden, Dächern usw. Aus Berechnungen sowie Infrarotaufnahmen am Gebäude weiß man, daß die größten Wärmeverluste an den Gebäudefenstern und -türen und insbesondere an Fenstern entstehen. Während es in der heutigen Zeit möglich ist, Wände mit einem relativ niedrigen k-Wert und somit einer guten Wärmeisolation herzustellen, bereitet es dennoch eine große Schwierigkeit auch den k-Wert von Fenstern und Türen so zu verringern, daß ertragbare Wärmeenergieverluste erzielt werden. Je besser zudem der k-Wert von Fenstern und Türen ist, desto höher sind deren Kosten.

Im Hinblick auf die kommenden Energieeinspargesetze und den ständig steigenden Anforderungen nach einer Verringerung des Energiebedarfs wird daher versucht, eine kontrollierte Raumbelüftung, insbesondere Einzelraumbelüftung, zu erzielen, wobei ein Verlust an Wärmeenergie verringert wird; dabei sind insbesondere die Fenster und Türen als Schwachpunkte zu berücksichtigen.

Aus der DE-2702214 ist ein Verbundfenster mit verbesserten Wärme- und Kälteschutzeigenschaften bekannt, wobei ein zwischen einem Fensterinnen- und -außenflügel befindlicher Innenraum so belüftet wird, daß je nach der vorherrschenden Außentemperatur entweder die Raumluft oder Aussenluft in den Fensterinnenraum an der Unterseite des Fensters eingeführt und an dessen Oberseite wieder ausgeführt wird. Durch diese Umwälzung der zwischen dem Innenflügel und dem Außenflügel befindlichen Luftsäule wird die Innenscheibe im wesentlichen temperaturneutral gehalten.

Die DE-2514429 beschreibt eine Raumlüftungsanlage, die ein Verfahren zur Wiederverwendung der Abluftwärme und Nutzbarmachung bisher verlorengehender Wärme bietet, wobei die Abluft durch Isolationsspalte der Außenwände hindurchgeleitet werden.

Aus der DE-3128906 ist eine Lüftungsvorrichtung für Räume mit zwei getrennten Strömungswegen zur Be- und Entlüftung bekannt, die für eine rekuperative Wärmerückgewinnung aus dem Entlüftungs-Luftstrom über im Gehäuse eingeschlossene Wärmetauscher miteinander in Wirkverbindung stehen und mit zwangsläufiger Luftführung in den beiden Strömungswegen durch diesen zugeordnete Radialgebläse.

Die DE-2743904 offenbart eine Vorrichtung zur schallgedämpften Zuführung von Außenluft in einen Innenraum über einen Rollladenkasten.

Die DE-2813008 beschreibt ein dezentrales Lüftungs-Wärmetauscher-System zur energiesparenden Raumlüftung, die in Normal- oder Lärmschutzfenster eingebaut bzw. integriert werden kann.

Ein Verfahren und eine Vorrichtung gemäß den Merkmalen der Oberbegriffen der Patentansprüche 1 und 10 sind aus der der DE-3217468 bekannt. Dieses Dokument schlägt im Besonderen vor, erwärmte, aber verbrauchte Luft aus einem Raum eines Gebäudes abzuführen und deren Wärmeinhalt im Tauschverfahren an die von außen in diesen Raum geleitete Frischluft (Zuluft) abzugeben; dabei wird die sogenannte Transportbandtechnik herangezogen, bei der der Wärmetauscher wie bei einem Transportband beweglich angeordnet ist und die Wärme vom Fortluftkanal zum Frischluftkanal transportiert. Diese bekannte Erfindung ist als ein Bauteil in einem Rollladenkasten integriert.

Schließlich offenbart die US 5,216,224 ein Verfahren und eine Vorrichtung zur Verminderung von Wärmeverlusten an z.B. einem Fenster als eine Wärmeenergieverluststelle zwischen einem Raum und einer kälteren Außenumgebung des Raumes unter Ausnutzung einer aus dem Coanda-Effekt resultierenden Zirkulation von Luft entlang des Fensters. Bei diesem Verfahren strömt die Luft zunächst entlang der Fensteraußenseite über eine Eintrittsöffnung in einen oberhalb des Fensters angeordneten Luftführungskanal und anschließend über eine zur Fensterinnenseite hin ausgerichtete Austrittsöffnung des Luftführungskanals entlang der Fensterinnenseite in den Raum. Die entlang der Fensteraußen- und Fensterinnenseite strömende Luft entzieht dem Fenster Wärme, wodurch die Temperatur an der Fensteraußenseite abnimmt und die in den Raum strömende Zuluft erwärmt wird. Dies hat einen geringeren Wärmeaustausch mit der Außenumgebung zur Folge.

Trotz der Vielfalt an Lüftungs- und Wärmetauschverfahren sowie kombinierten Systemen und Vorrichtungen dafür war es bislang nicht möglich, einen Einzelraum energiesparend und kontrolliert zu be- bzw. entlüften, wobei gleichzeitig die an einer Wärmeverluststelle, beispielsweise an einem Fenster oder an einer Tür, auftretende Verlustwärmeenergie vermindert werden kann.

Angesichts dieser Problematik hat sich der Erfinder die Aufgabe gestellt, ein System für eine kontrollierte Einzelwohnraumbelüftung zu schaffen, das im Vergleich zu den herkömmlichen Belüftungssystemen in energetischer Hinsicht besonders effizient arbeitet.

Dieses System soll jedoch nicht nur auf die Belüftung von Wohnräumen beschränkt sein, sondern prinzipiell auch anderweitig angewendet werden können, d. h. generell für die Versorgung eines beliebigen Raums mit einem Medium bestimmter Qualität, wobei ein dabei auftretender Energieverlust zumindest teilweise wieder genutzt oder vermindert werden kann.

Diese Aufgabe wird durch das Verfahren gemäß den Merkmalen des Patentanspruchs 1 sowie die Vorrichtung gemäß den Merkmalen des Patentanspruchs 10 gelöst.

Vorteilhafte Weiterentwicklungen sind Gegenstand der jeweiligen Unteransprüche.

Weitere Vorteile, Merkmale oder Ausführungsformen der Erfindung werden aus der nachstehenden Beschreibung unter Bezugnahme auf die begleitende Zeichnung besser ersichtlich.

Nachstehend erfolgt eine kurze Beschreibung der bevorzugten Ausführungsformen der Erfindung, wobei
Fig. 1a eine erste Ausführungsform einer erfindungsgemäßen Luftaustauschvorrichtung im Querschnitt zeigt,
Fig. 1b die erste Ausführungsform in einer Draufsicht zeigt,
Fig. 2a eine zweite Ausführungsform im Querschnitt zeigt,
Fig. 2c die Einzelheit "II C" in Fig. 2b;
Fig. 2b die zweite Ausführungsform in einer Draufsicht zeigt,

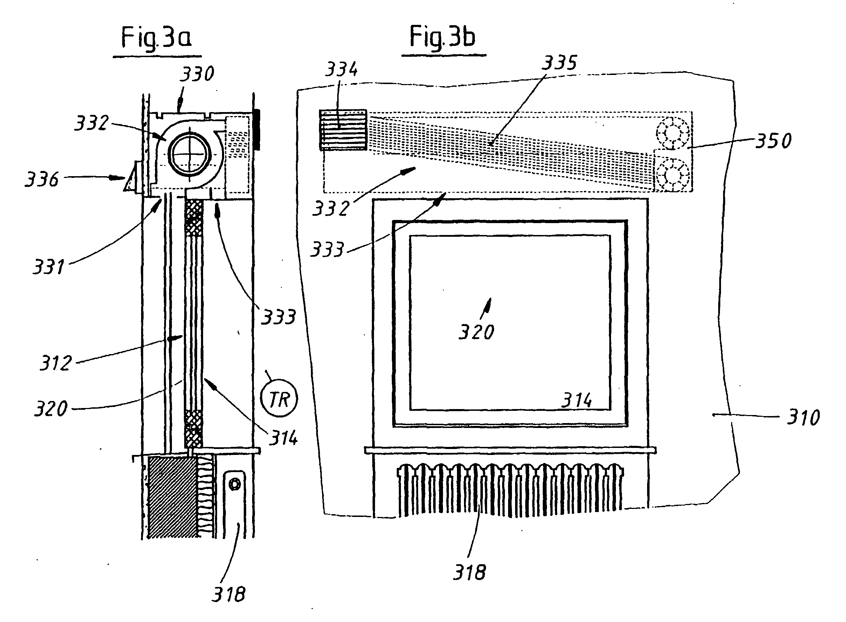

Fig. 3a eine dritte Ausführungsform im Querschnitt zeigt,
Fig. 3b die dritte Ausführungsform in einer Draufsicht zeigt,

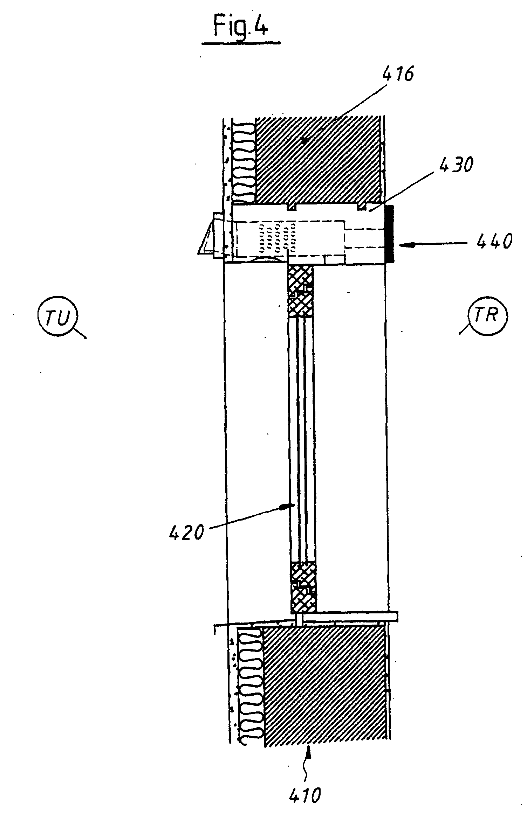

Fig. 4 eine vierte Ausführungsform im Querschnitt zeigt,

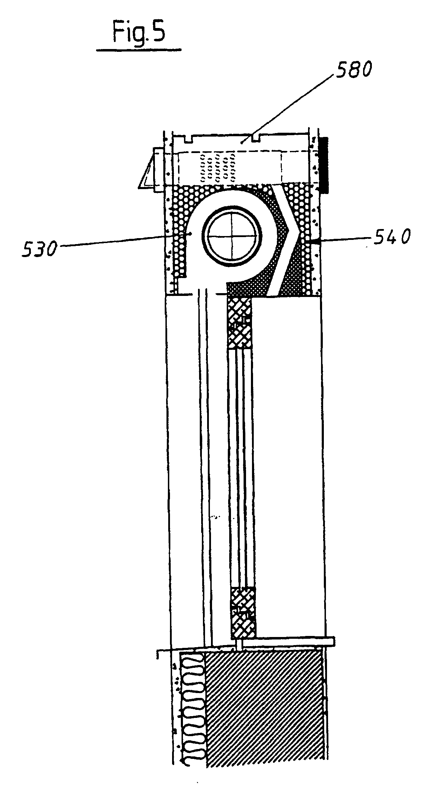

Fig. 5 eine fünfte Ausführungsform im Querschnitt zeigt,

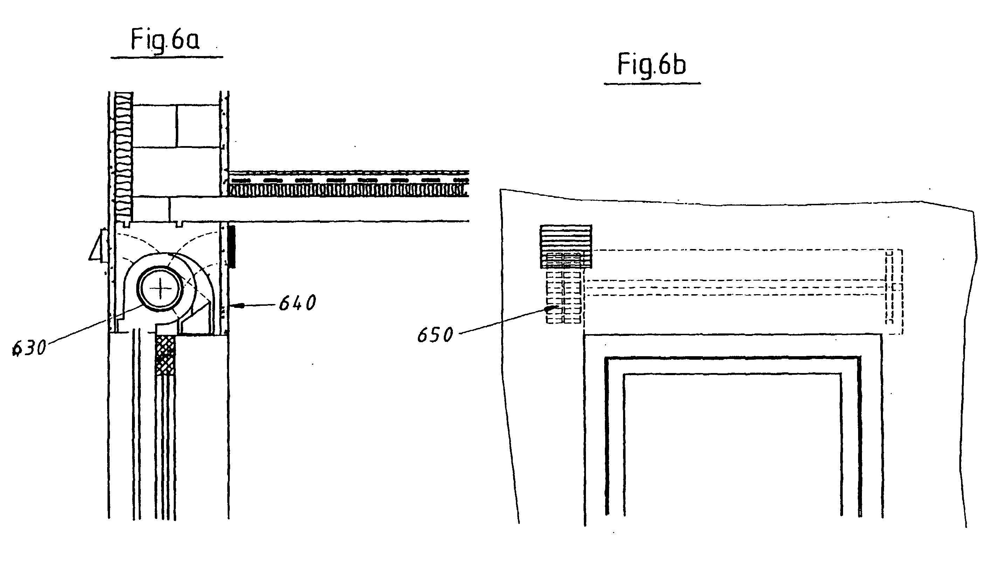

Fig. 6a eine sechste Ausführungsform im Querschnitt zeigt,
Fig. 6b die sechste Ausführungsform in einer Draufsicht zeigt, und

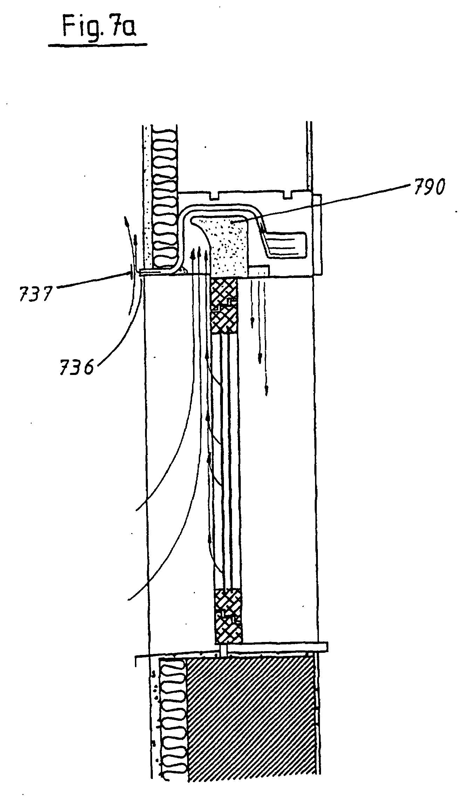

Fig. 7a eine der Fig. 4 entsprechende Ansicht einer siebten Ausführungsform der Erfindung;

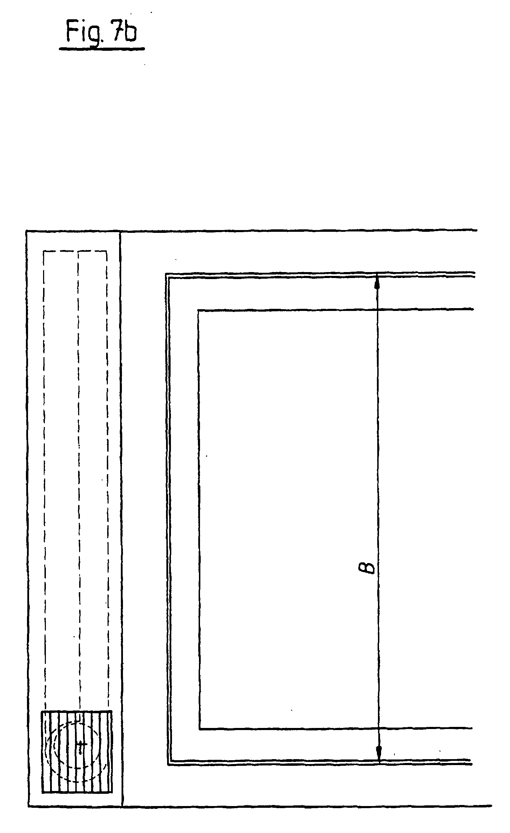

Fig. 7b die siebte Ausführungform bei einer Ansicht von Innen; und

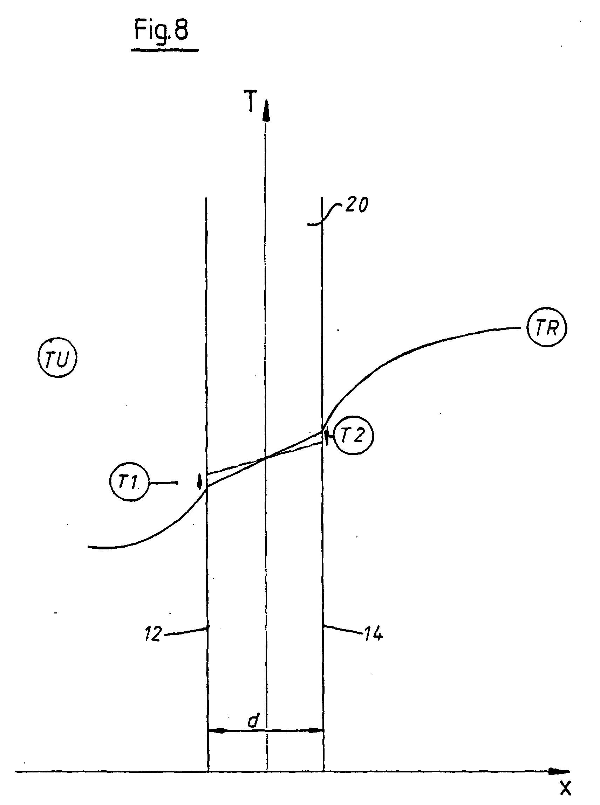

Fig. 8 ein Diagramm zeigt, das den Temperaturverlauf an einem Fenster von der Fensterinnenseite zur Fensteraußenseite darstellt.

Nachstehend erfolgt die Beschreibung der Erfindung an bevorzugten Ausführungsformen, wobei auf die Zeichnung Bezug genommen wird.

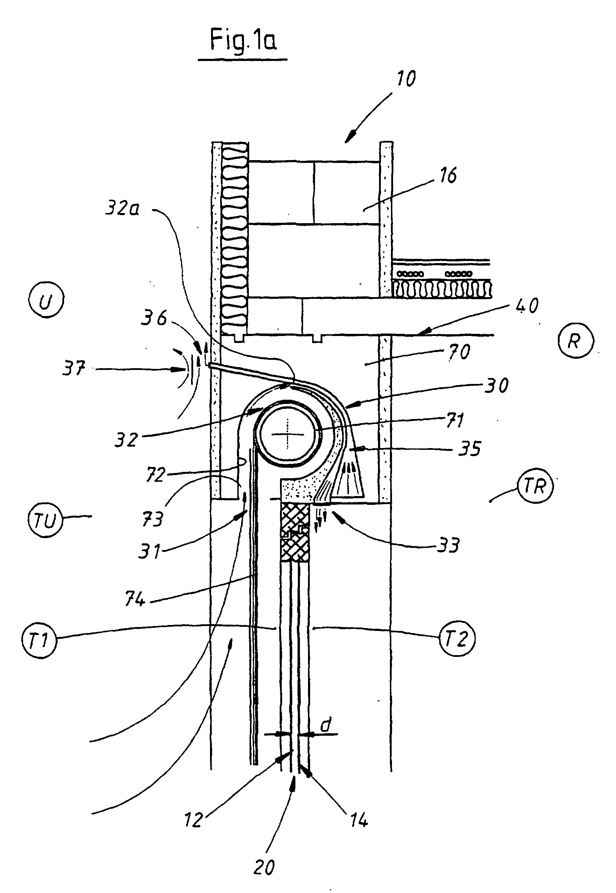

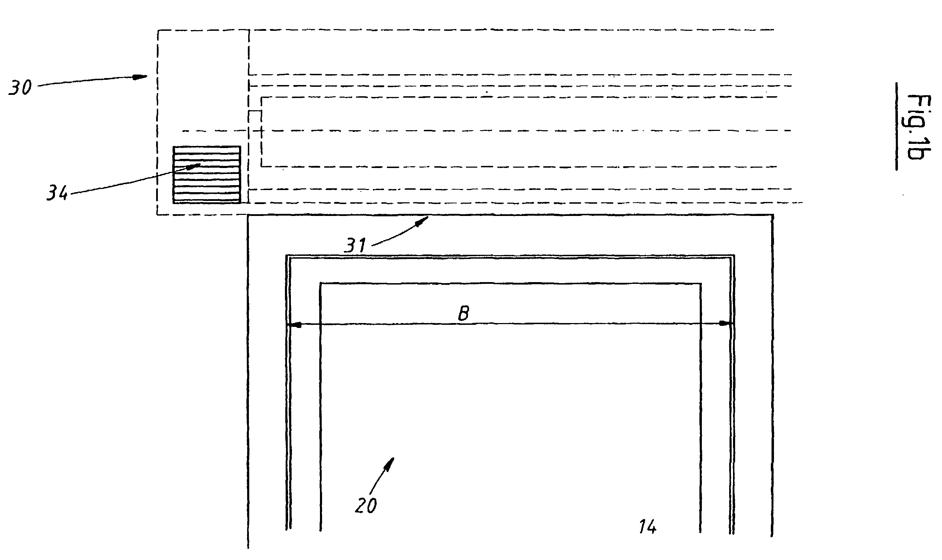

In Fig. 1a und Fig. 1b ist eine erste erfindungsgemäße Ausführungsform in der Gestalt einer Raumbelüftungsvorrichtung dargestellt. Das Bezugszeichen R bezeichnet einen Raum, beispielsweise einen Wohnraum oder Nutzraum eines Gebäudes, in dem sich Raumluft mit einer Raumtemperatur TR befindet. Mit dem Bezugszeichen U wird eine Umgebung, beispielsweise die Außenumgebung, des Raums R bezeichnet. In der Umgebung U befindet sich Umgebungsluft mit einer Umgebungstemperatur TU.

Wie es in den Fig. 1a und 1b zu sehen ist, befindet sich zwischen dem Raum R und der Umgebung U eine Wand 10, die der Abtrennung entspricht. In der Wand 10 befindet sich ein Fenster 20, die der Wärmeenergieverluststelle entspricht. An einer Position oberhalb des Fensters 20 und unterhalb eines Sturzes 16 ist die Raumbelüftungsvorrichtung 40 angebracht.

Die Raumbelüftungsvorrichtung 40 dient zum Austausch von Luft im Raum R mit Luft aus der Umgebung U. Die Raumbelüftungsvorrichtung 40, die der Mediumaustauschvorrichtung entspricht, hat eine Luftsammelvorrichtung 30, die wiederum eine Umgebungslufteinlaßöffnung 31, durch welche Luft aus der Umgebung U in eine eintreten kann, einen Umgebungsluftführungskanal 32, durch welchen die aus der Umgebung U eingetretene Luft gesammelt und weitergeleitet wird, sowie eine Umgebungsluftauslaßöffnung 33 aufweist, durch welche die im Umgebungsluftführungskanal 32 weitergeleitete Luft in den Raum R eintreten kann.

Die Umgebungslufteinlaßöffnung 31 und die Umgebungsluftauslaßöffnung 33 sind vorzugsweise jeweils als ein länglicher Schlitz in der Luftsammelvorrichtung 30 ausgebildet, der sich jeweils an der Fensteraußenseite bzw. an der Fensterinnenseite über die ganze Breite B des Fensters erstreckt, wie es in Fig. 1b angedeutet ist. Die Schlitzöffnung 33 ist, wie es in Fig. 1a zu sehen ist, an der Fensterinnenseite derart geöffnet, daß Umgebungsluft, die aus der Umgebung über die Luftsammelvorrichtung 30 in den Raum R geleitet wird, direkt am Fenster 20 entlang und über die ganze Breite B des Fensters 20 in den Raum R einströmen kann.

Die Luftsammelvorrichtung 30 hat desweiteren eine Raumlufteinlaßöffnung 34, durch welche Luft aus dem Raum R in die Luftsammelvorrichtung 30 einströmen kann, einen Raumluftführungskanal 35, durch welchen die aus dem Raum R eingeströmte Raumluft weitergeleitet werden kann, sowie eine Raumluftauslaßöffnung 36, durch welche die weitergeleitete Raumluft in die Umgebung U ausströmen kann.

Die Raumlufteinlaßöffnung 34 ist beispielsweise als ein Luftgitter oder eine elektrisch oder mechanisch betätigte Jalousie ausgebildet. Der Raumluftführungskanal 35 ist in dieser Ausführungsform, wie es in Fig. 1a zu sehen so gestaltet, daß er zumindest abschnittsweise in der Nähe des Umgebungsluftführungskanals verläuft und kontinuierlich auf die Raumluftauslaßöffnung zu nach oben hin ansteigt, wodurch er als eine Art Kamin füngiert.

An der Wand 10 ist gegenüber der Raumluftauslaßöffnung eine Ablenkvorrichtung bzw. eine Blende 37 angebracht, wodurch der aus der Raumluftauslaßöffnung 36 ausströmende Raumluftstrom aufgrund der nach oben gerichteten Raumluftauslaßöffnung abgelenkt wird. Die Ablenkvorrichtung 37 hat die Aufgabe, Umgebungsluftströmungen aufgrund eines Windeinfalls oder thermisch bedingte Luftbewegungen u. a. so durch den zwischen der Ablenkvorrichtung 37 und der Wand 10 ausgebildeten Kanal zu lenken, daß an der Raumluftauslaßöffnung ein leichter Unterdruck entsteht, wodurch die im Raumluftführungskanal 35 geführte Raumluft in den Kanal gesaugt und somit von der durch den Kanal strömenden Luft mitgerissen wird.

In dieser Ausführungsform ist, wie es in Fig. 1 zu sehen ist, die Luftaustauschvorrichtung 40 mit einem Rollladenkasten 70 integriert. Der Umgebungluftführungskanal 32 verläuft in einem Kanal, der zwischen einem Außenumfang des Rollladenpakets 71 und einer Rollladenkasteninnenwand 72 ausgebildet ist. Eine Rollladenkastenöffnung 73, durch welche der Rollladen 74 geführt wird, entspricht der Umgebungslufteinlaßöffnung 31.

Nachstehend wird nun das Prinzip bzw. der Betrieb dieser erfindungsgemäßen Ausführungsform erläutert.

Im Raum R befindet sich Raumluft, die eine Raumtemperatur TR hat. In der Umgebung U befindet sich Umgebungsluft, die eine Umgebungstemperatur TU hat. Aufgrund von Zirkulationsbewegungen im Raum R kommt die Raumluft mit der Fensteroberfläche 14 in Kontakt. Ist nun die Raumtemperatur TR der Raumluft, die sich in einem Grenzbereich der inneren Fensteroberfläche 14 befindet, höher als die Umgebungstemperatur TU der Umgebungsluft, die sich in einem Grenzbereich der äußeren Fensteroberfläche 12 befindet, dann erfolgt aufgrund von Konvektion an den Fensteroberflächen 12, 14 und von Wärmeleitung durch das Fenster 20 eine Wärmeenergieabgabe, d. h. ein Verlust an Wärmeenergie, an die Umgebungsluft.

Die Umgebungsluft an der Fensteroberfläche 12 nimmt die abgegebene Wärmeenergie auf, wodurch sich die Temperatur dieser Umgebungsluft auf T1 erhöht. Da die Temperatur T1 der in einer Grenzfläche der Fensteroberfläche 12 befindlichen Umgebungsluft somit höher ist als die Umgebungstemperatur TU, steigt die erwärmte Umgebungsluft in der Nähe der Fensteroberfläche 12 nach oben in Richtung der über dem Fenster 20 angebrachten Luftsammelvorrichtung 30. Die somit als eine Art Luftfilm an der Grenzfläche der Fensteroberfläche 12 aufsteigende Umgebungsluft strömt über die offene Umgebungslufteinlaßöffnung 31 der Luftsammelvorrichtung 30 in den Umgebungsluftführungskanal 32 ein, wird darin gesammelt und zur Umgebungsluftauslaßöffnung 33 geleitet. An beliebiger Stelle wird der Umgebungsluftführungskanal 32 ist vorzugsweise eine Ventilanordnung (nicht näher bezeichnet) eingebaut, mit der eine Einwegströmung der Frischluft von außen nach innen sichergestellt wird. Das Ventil kann entweder so ausgebildet sein, daß es automatisch öffnet. Es ist jedoch gleichermaßen möglich, daß Ventil als gesteuertes Ventil auszubilden, das dann in Abhängigkeit von den Signalen einer Steuervorrichtung gezielt betätigt wird.

Gleichzeitig tritt bei einer offenen Raumlufteinlaßöffnung 34 aufgrund der Zirkulationsbewegungen Raumluft in den Raumluftführungskanal 35 ein. Diese Raumluft hat beim Eintritt in den Raumluftführungskanal noch die Raumtemperatur TR, gibt aber im Verlauf der Führung durch den Raumluftführungskanal einen Teil ihrer Wärmeenergie an die im Umgebungsluftführungskanal geführte Umgebungsluft ab und erreicht schließlich eine Temperatur T3; neben der thermisch bedingten Strömungsbewegung der Raumluft im Raumluftführungskanal wird die Strömung zudem noch durch den vorstehend beschriebenen Sogeffekt gefördert. Vorzugsweise befindet sich auch im Raumlüftführungskanal 35 an geeigneter Stelle eine Ventilanordnung, mit der sichergestellt wird, daß Raumluft nur in der vorgeschriebenen Strömungsrichtung von innen nach außen strömen kann. Auch hierbei kann es sich wiederum um ein selbstgesteuertes Ventil oder aber durch ein gesteuertes Ventil handeln.

Die über die Umgebunglufteinlaßöffnung 31 in den Raum R eintretende Umgebungsluft strömt nun über die auf die Fensteroberfläche 14 ausgerichtete Umgebungsluftauslaßöffnung 33 wiederum als eine Art Luftfilm an der inneren Fensteroberfläche 14 entlang ein und sinkt über die ganze Fensterbreite B verteilt ab. Dabei erreicht die eintretende Umgebungsluft (Frischluft) schließlich die Temperatur T2.

Wie es in Fig. 8 zu sehen ist, wird während dieser Vorgänge das Temperaturgefälle oder der Temperaturunterschied zwischen der inneren Fensteroberfläche 14 und der äußeren Fensteroberfläche 12 verringert. Dadurch kann der am Fenster 20 auftretende Wärmeengergieverlust vom Raum R an die Umgebung U vermindert werden. In Fig. 8 ist der Temperaturverlauf von der Seite des Raums R, in dem sich Raumluft mit Raumtemperatur TR befindet, zur Seite der Umgebung U dargestellt, in der sich Umgebungsluft mit Umgebungstemperatur TU befindet. Durch eine gezielte oder kontrollierte Luftführung, wie vorstehend beschrieben, kann beispielsweise ein Temperaturverlauf erreicht werden, wie es mit der gestrichelten Linie dargestellt ist. Die volle Linie in Fig. 8 gibt den normalen Temperaturverlauf ohne erfindungsgemäßer Luftführung an.

Der vorstehend beschriebene Wärmeenergietauscheffekt zwischen der im Raumluftführungskanal geführten Raumluft und der im Umgebungsluftführungskanal geführten Umgebungsluft kann ferner durch die Verwendung eines in die Luftsammelvorrichtung integrierten Wärmetauschers noch zusätzlich verstärkt werden. Als ein Wärmetauscher kann dabei ein bekannter Gegenstrom-, Gleichstrom- oder Kreuzstromwärmetauscher verwendet werden.

Gemäß der ersten Ausführungsform der Erfindung wird somit verbrauchte Luft aus einem Raum eines Gebäudes abgeführt und deren Wärmeenergieinhalt im Tauschverfahren an die von außen in diesen Raum geleitete Frischluft abgegeben. Der am Fenster 20 auftretende Wärmeenergieverlust wird unter Heranziehung der thermisch bedingten Strömungsbewegungen der Luft reduziert. Somit kann mit einem derartigen Luftaustauschsystem mit Wärmeenergierückgewinnung eine kontrollierbare Einzelraumbelüftung erzielt werden, die besonders energiesparend arbeitet und auf die Verhältnisse eines jeden einzelnen Raums optimal abgestimmt werden kann.

Die erste erfindungsgemäße Ausführungsform arbeitet ausschließlich durch Ausnutzung von physikalisch und thermisch bedingten Strömungsbewegungen in der Luft. Die an der Fensteroberfläche 12 erwärmte Umgebungsluft steigt an der äußeren Fensteroberfläche 12 nach oben und wird über den Umgebungsluftführungskanal 32 in den Raum R entlang der inneren Fensteroberfläche 14 eingeleitet. Diese frische Umgebungsluft sinkt ab, da sie eine niedrigere Temperatur hat als die Raumluft. Durch das Einströmen der Umgebungsluft in den Raum unterstützt durch die darauffolgende Temperaturangleichung entsteht im Raum R ein leichter Überdruck der dazu führt, daß die wärmere, sich im Raum R bewegende Raumluft über die offene Raumlufteinlaßöffnung 34 mit Rückstauklappe und den Raumluftführungskanal 35 an die Umgebung U abgeführt wird. Ebenso entsteht beim Öffnen oder Schließen der Tür dieses Raumes R ein Unter- bzw. Überdruck (Pumpwirkung) der über den Raumluftführungskanal 35 oder Umgebungsluftauslaßöffnung 33 ausgeglichen bzw. abgebaut wird. Auf diese Weise wird im Raum R ein Luftaustauch durchgeführt. Gleichzeitig wird durch die beschriebene Luftführung an der inneren Fensteroberfläche 14 und der äußeren Fensteroberfläche 12 das Temperaturgefälle zwischen den Oberflächentemperaturen T2 und T1 verringert und somit ein am Fenster 20 normalerweise entstehender Wärmeenergieverlust vermindert. Weiterhin kann durch einen Wärmeenergieübergang von der aus dem Raum R ausströmenden Raumluft an die in den Raum R einströmende Umgebungsluft zusätzlich Energie wiedergewonnen werden.

Die Luftaustauschvorrichtung 40 wird in diesem Fall in Verbindung mit einem Rollladenkasten verwendet. Für den Fall, daß der Rollladen geschlossen ist, kann eine weitere Steigerung der Effizienz erreicht werden. Zwischen dem Rollladen und der Fensteroberfläche 12 wird dann ein Luftspeicher ausgebildet, der einerseits als eine Wärmeisolierung dient. Andererseits kann die in diesem Luftspeicher befindliche Umgebungsluft dann durch geeignete interne Kanäle neben der Umgebungsluft, die außerhalb des zwischen dem Rollladen und dem Fenster ausgebildeten Luftspeichers in die Luftsammelvorrichtung strömt, in den Raum geführt werden. Gemäß Fig. 1a kann diese Luft im Luftspeicher zum obersten Punkt 32a des Kanals 32 strömen, und dort der im Kanal 32 strömenden Umgebungsluft beigemischt werden.

Da der an einem Fenster (oder auch an einer Tür) infolge eines starken Temperaturgefälles normalerweise auftretende Wärmeenergieverlust vermindert werden kann, kann auf kostengünstigere Fenster bzw. Türen mit schlechteren Isolationseigenschaften zurückgegriffen werden.

Da erfindungsgemäß der Luftaustausch an der Wärmeenergieverluststelle vorgenommen wird, kann die erhebliche Dynamik der Konvektionsströmung an der Wärmeenergieverluststelle posititv für den Luftaustausch genutzt werden, ohne irgendwelche Strömungsleiteinrichtungen zu benötigen.

Da in dieser Ausführungsform ausschließlich die thermisch und physikalisch bedingten Strömungsbewegungen ausgenutzt werden, um den Luftaustausch durchzuführen, ist die dabei entstehende Lärmbelästigung äußerst gering, zumal die Strömungsgeschwindigkeiten sehr gering bleiben können, weil die gesamte Raumbreite B in das Kanalsystem einbezogen werden kann.

Die weiteren nachstehend beschriebenen Ausführungsformen entsprechen im wesentlichen der ersten Ausführungsform. Daher wird eine Beschreibung derselben Teile oder des Prinzips ausgelassen. Die für die Beschreibung der weiteren Ausführungsformen herangezogenen Bauteile, die denen der ersten Ausführungsform entsprechen oder ähnlich sind, sind mit denselben Bezugszeichen bezeichnet, wobei zur Kennzeichnung der jeweiligen Ausführungsform eine der jeweiligen Ausführungsform entsprechende Zahl "2", "3", "4", "5" oder "6" vorangestellt ist.

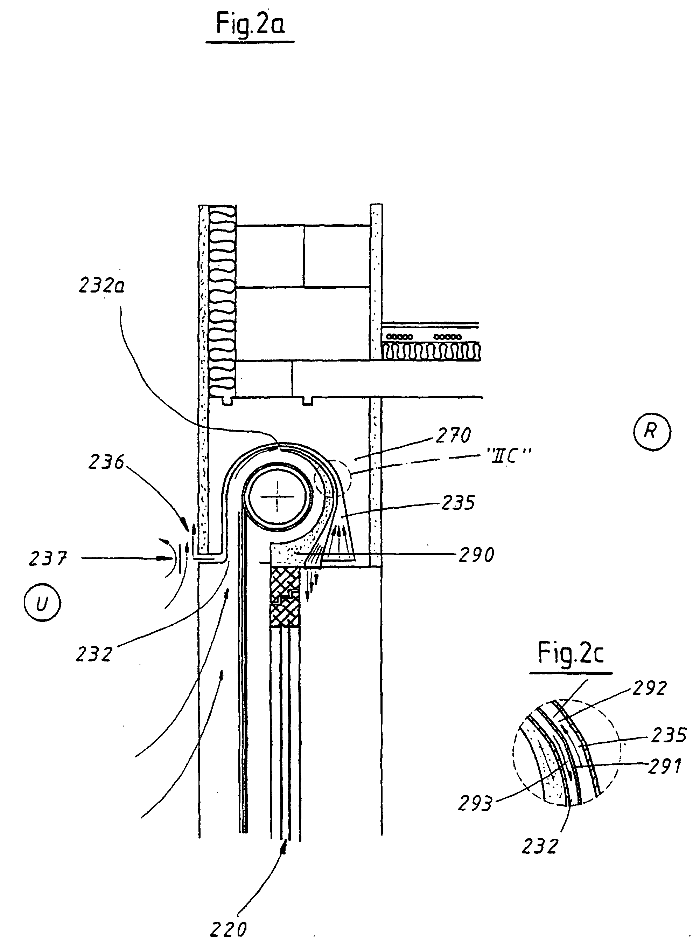

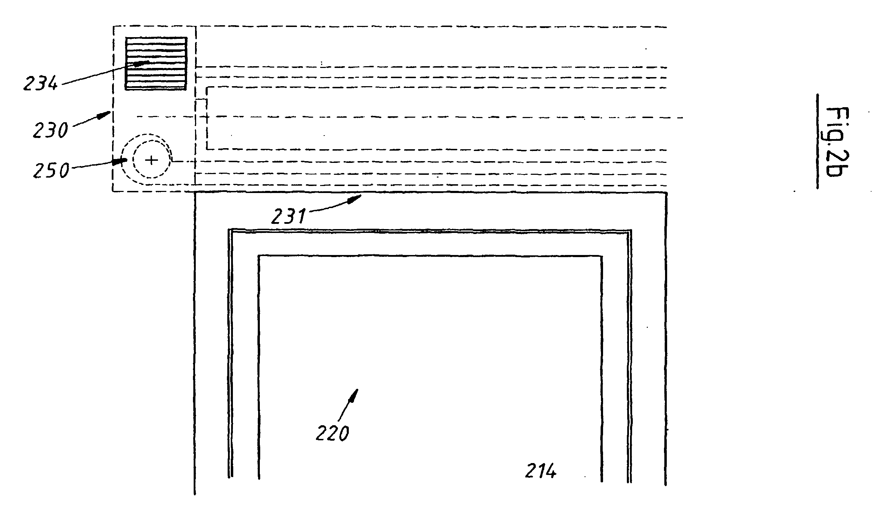

In Fig. 2a bis 2c ist eine zweite Ausführungsform der Erfindung dargestellt. Die Luftaustauschvorrichtung 240 weist in diesem Fall zusätzlich eine Fördereinrichtung auf, die in Fig. 2b mit dem Bezugszeichen 250 schematisch dargestellt ist. Durch diese Fördereinrichtung 250, beispielsweise ein Radialgebläse oder ein Ventilator, kann die thermisch bedingte Strömungsbewegung der Raumluft und/oder der Umgebungsluft in den jeweiligen Führungskanälen unterstützt werden. Dadurch kann für den Fall, daß zwischen der Raum- und Umgebungstemperatur nur ein geringer Temperaturunterschied vorliegt, wodurch ohne Fremdförderung nur ein unzureichender Luftaustausch zwischen der Umgebung und dem Raum stattfinden würde, eine ausreichende Belüftung mit Frischluft erzielt werden.

Da in dieser Ausführungsform der Luftaustausch somit durch eine Fördereinrichtung unterstützt erfolgt, kann der Verlauf des Raumluftführungskanals 235 von dem bei der ersten Ausführungsform abweichen. Dies ist in Fig. 2a zu erkennen, wobei der Raumluftführungskanal 235 im wesentlichen dem Umfang des Rolladengehäuses folgt und schließlich an einer beliebigen Stelle austreten kann.

Wie aus Fig. 2a gut zu erkennen ist, verlaufen die Kanäle 232 und 235 über eine weite Winkelstrecke, mindestens jedoch über einen 180°-Bogen nebeneinander, so daß sich automatisch eine verhältnismäßig lange Wärmeaustauschstrecke ergibt, wodurch der Wirkungsgrad der Vorrichtung zusätzlich verbessert wird. Um den Wärmetauscheffekt an die entscheidenden Stelle zu konzentrieren, ist auf der Innenseite des Rollladenkastens ein Isolierkörper 290 vorgesehen, der bis zum obersten Punkt 232a des Kanals 232 reicht. Wie am besten aus Fig. 2c ersichtlich, befindet sich zwischen den Kanälen 232 und 235 eine Trennwand 291, über die die Wärme zwischen den Strömungen in den Kanälen 235 und 232 ausgetauscht wird. Zu diesem Zweck ist die Trennwand 291 vorzugsweise mit geeigneten Wärmeleiteinrichtungen beispielsweise Rippen 292, 293 ausgestattet, um den Wirkungsgrad der Wärmetauschvorrichtung zusätzlich anzuheben.

Da die Förderung der Luft (der Raumluft und/oder der Umgebungsluft) durch die Fördereinrichtung 250 nur unterstützend erfolgt, kann eine Fördereinrichtung mit geringer Leistung verwendet werden, womit kein großer Lärm verursacht wird.

In Fig. 3a und Fig. 3b ist eine dritte Ausführungsform der Erfindung dargestellt. Gemäß der dritten Ausführungsform befindet sich unter dem betreffenden Fenster ein Heizkörper 318. Durch die aus der Umgebungsluftauslaßöffnung 333 einströmende Umgebungsluft, die zunächst am Fenster 320 entlang absinkt und dann in den Raum R einströmt, wird erreicht, daß die stark temperierte Luft, die vom Heizkörper 318 kommt, von der in den Raum R einströmenden Umgebungsluft mitgenommen wird, im Raum zirkuliert und diesen erwärmt, anstelle am Fenster entlang aufzusteigen und an der Fensteroberfläche 314 abzukühlen.

In Fig. 4 ist eine vierte Ausführungsform der Erfindung dargestellt. In Fig. 4 ist eine Luftaustauschvorrichtung 440 zu sehen, die als eine eigenständige Vorrichtung ausgebildet ist. Im Gegensatz dazu waren die Luftaustauschvorrichtungen gemäß der vorstehend beschriebenen Ausführungsformen mit einem Rollladenkasten integriert. Somit kann diese erfindungsgemäße Luftaustauschvorrichtung selbst für den Fall verwendet werden, daß kein Rollladenkasten als Unterbringvorrichtung zur Verfügung steht.

In Fig. 5 ist eine fünfte Ausführungsform der Erfindung dargestellt. Mit dem Bezugszeichen 580 ist ein separater Wärmetauscher angedeutet, der sich über der Luftaustauschvorrichtung 540 befindet. Im Unterschied zu den vorangegangen Ausführungsformen sind hier der Wärmetauscher 580 und die Luftaustauschvorrichtung also als getrennte Bauteile ausgebildet, die miteinander kombiniert werden können.

In Fig. 6a und Fig. 6b ist eine sechste Ausführungsform der Erfindung dargestellt. Hier weist die Luftaustauschvorrichtung 640 eine Fördereinrichtung 650 auf, die zugleich als ein Wärmetauscher ausgebildet ist.

Die in den Fig. 7a und 7b gezeigte Vorrichtung unterscheidet sich von den zuvor beschriebenen Ausführungsbeispielen dadurch, daß hier kein Rollladenkasten in die Lüftungskonstruktion einbezogen ist. Auf diese Weise ergibt sich eine sehr kompakte Bauart, insbesondere eine Bauart mit sehr geringer Höhe, die es sogar ermöglicht, den beispielsweise wiederum als Modul ausgebildeten Luftsammelkanal in das Fenster zu integrieren bzw. auf den Fensterrahmen aufzusetzen. Diese Variante eignet sich sowohl für Neu- als auch für Altbauten. Man erkennt ferner auf der Darstellung gemäß Fig. 7a, daß die Kanäle für Frischluft und Abluft auch hier über verhältnismäßig lange Strecke Seite bei Seite geführt werden, um auf diese Weise die Wärmetauschstrecke und damit den Wirkungsgrad groß zu halten. Auf dem Fensterstock sitzt der Isolierkörper 790, um den herum die Wärmeaustauschstrecke verläuft. Es zeigt sich, daß die Austrittsöffnung 737 sogar verhältnismäßig tief gelegt werden kann, ohne die gewollte thermisch bedingte Eigenströmung des nach außen strömenden Luftstroms über Gebühr zu verhindern. Um die Strömungsrichtung nach außen zu stabilisieren, ist vorteilhafterweise vor die Front der Austrittsöffnung 737 eine Blende 795 geschaltet, die zweierlei bewirkt: zum einen wird sichergestellt, daß gegebenenfalls anstehender Wind nicht auf die Austrittsöffnung 737 unmittelbar einwirkt. Zum anderen entsteht durch die vorgeschaltete Blende 795 eine Düsenwirkung, mit der Folge, daß sich an der Austrittsstelle des Kanals 737 ein Unterdruck einstellt, welcher das Abströmen der verbrauchten Luft nach außen begünstigt.

Obwohl in den vorstehend beschriebenen Ausführungsformen die Luftaustauschvorrichtung mit einem Rollladenkasten integriert oder als selbständiges Bauteil beschrieben wurde, soll ausdrücklich darauf hingewiesen werden, daß die Luftaustauschvorrichtung gleichermaßen als ein Modul mit einem entsprechend angepaßten Sturz, beispielsweise einem Fenster- oder Türsturz, integriert sein kann.

Außerdem sei darauf hingewiesen, daß anstelle eines Fensters als eine Wärmeenergieverluststelle auch eine Tür oder eine andere Stelle in Frage kommen kann, an der ein Wärmeenergieverlust zwischen einem Raum und der Umgebung entsteht.

Darüber hinaus muß es sich bei der Umgebung nicht immer um die Außenumgebung handeln. Dieses Verfahren zum Luftaustausch kann ebenso auch zwischen zwei Räumen, beispielsweise zwischen zwei Wohn- oder Nutzräumen eines Gebäudes, erfolgen.

Obwohl. bei allen vorstehend beschriebenen Ausführungsformen vorzugsweise der Austausch von Luft beschrieben wurde, sei ausdrücklich darauf hingewiesen, daß es sich auch um anderes Medium handeln kann, sofern es ähnliche physikalische Eigenschaften wie Luft aufweist. Beispielsweise kann die Erfindung auch für den Austausch eines beliebiges Gases oder Fluids, wie Öl, Wasser oder Blut, Verwendung finden, die sich mit einer Änderung ihrer Temperatur ähnlich wie Luft verhalten, d. h. mit einer Temperaturänderung eine Dichteänderung erfahren.

Als Wärmetauscher kann selbstverständlich auch eine Regenerator-Einrichtung Anwendung finden.

Desweiteren ist es möglich, mit der Luftaustauschvorrichtung eine Steuervorrichtung zu verwenden, wodurch der Betrieb der Luftaustauschvorrichtung, beispielsweise über die Fördereinrichtung oder aber auch nur über ein elektrisch gesteuertes Luftgitter, in Abhängigkeit von verschiedenen Zustandsparametern des Umgebungsmediums und/oder des Raummediums kontrolliert erfolgen kann. Zustandsparameter können in diesem Sinne beispielsweise die Temperatur, Feuchtigkeit, Druck, Sauerstoffgehalt der Luft usw. sein. Die Ansteuerung der Luftaustauschvorrichtung bzw. die Ansteuerung eines eventuell vorgesehenen Gebläses kann auch in Abhängigkeit von weiteren Kriterien erfolgen, beispielsweise derart, daß die Einzelraumbelüftung generell dann deaktiviert wird, wenn der Raum manuell durch Öffnen bzw. durch Kippen des Fensters oder der Tür gelüftet. Auf diese Weise werden unnötige Energieverluste vermieden.

Auf diese Weise wird eine auf jeden Raum, in dem die Luftaustauschvorrichtung eingesetzt wird, abgestimmter Luftaustausch mit gleichzeitiger Wärmeenergieeinsparung möglich.

Die Erfindung bezieht sich somit insbesondere auf ein Verfahren für eine energiesparende kontrollierte Einzelwohnraumbelüftung und eine Vorrichtung zur Durchführung dieses Verfahrens. In einem Raum befindet sich eine Raumluft mit Raumtemperatur. In einer Umgebung zu diesem Raum befindet sich Umgebungsluft mit einer Umgebungstemperatur. Zwischen dem Raum und der Umgebung ist eine Wand als Abtrennung angeordnet. Wenn die Raumtemperatur höher ist als die Lufttemperatur, kommt es durch einen Wärmeübergang oder Undichtigkeiten am Fenster als eine in der Wand befindliche Wärmeenergieverluststelle zu einer Erwärmung der an der Fensteraußenseite angrenzenden Umgebungsluft. Diese erwärmte Umgebungsluft steigt an der Fensteraußenoberfläche entlang nach oben und wird als Frischluft über eine über dem Fenster angeordnete Luftsammelvorrichtung in den Raum geleitet. Da die in den Raum geleitete Umgebungsluft kälter ist als die im Raum befindliche Raumluft sinkt diese an der inneren Fensteroberfläche entlang ab. Dadurch kann der Temperaturunterschied zwischen der an der inneren und äußeren Fensteroberfläche und somit der Wärmeverlust am Fenster vermindert und Umgebungsluft als Frischluft in den Raum eingeleitet werden.

## Patentansprüche

1. Verfahren zur Versorgung eines Raums (R) mit einem Medium bestimmter Qualität, wobei sich zwischen dem Raum (R), in dem sich ein Raummedium mit einer Raumtemperatur (TR) befindet, und einer Umgebung (U), in der sich ein Umgebungsmedium mit einer im Vergleich zur Raumtemperatur niedrigeren Umgebungstemperatur (TU) befindet, eine Abtrennung (10) mit einer Wärmeenergieverluststelle (20) befindet, mit folgenden Schritten:
Erwärmen des an der Wärmeenergieverluststelle (20) angrenzenden Umgebungsmediums durch Wärmeenergie, die aus dem Raum (R) über die Wärmeenergieverluststelle (20) an die Umgebung (U) abgegeben wird, auf eine erste Temperatur (T1), die höher ist als die Umgebungstemperatur (TU), so daß das erwärmte Umgebungsmedium entlang einer der Umgebung zugewandten Oberfläche (12) der Wärmeenergieverluststelle (20) aufsteigt,
Sammeln des entlang der Oberfläche (12) der Wärmeenergieverluststelle (20) aufsteigenden Umgebungsmediums in einer oberhalb der Wärmeenergieverluststelle (20) angeordneten Mediumsammelvorrichtung (30),
Einströmen des in der Mediumsammelvorrichtung (30) gesammelten Umgebungsmediums, das eine zweite Temperatur (T2) hat, die niedriger ist als die Raumtemperatur (TR), in den Raum (R)
Verteilen des in den Raum (R) eingeströmten Umgebungsmediums in dem im Raum (R) befindlichen Raummedium und Vermischen mit diesem,
Ausströmen eines Teils des Raummediums, das sich im Raum (R) befindet, mit einer dritten Temperatur (T3) über die Mediumsammelvorrichtung (30) zur Umgebung (U), und
Austauschen von Wärmeenergie zwischen dem in der Mediumsammelvorrichtung (30) gesammelten Umgebungsmedium und dem aus dem Raum (R) strömenden Raummedium, wobei die dritte Temperatur (T3) höher ist als die erste (T1) und zweite (T2) Temperatur, **dadurch gekennzeichnet, dass**
die Strömung des einströmenden Umgebungsmediums von der der Umgebung zugewandten Oberfläche der Wärmeenergieverluststelle (20) hin ausgerichteten Eintrittsöffnung (31) bogenförmig zu der der dem Raum zugewandten Oberfläche der Wärmeenergieverluststelle (20) hin ausgerichteten Austrittsöffnung (33) derart geführt ist, daß das einströmende Medium in einem Grenzbereich entlang der dem Raum (R) zugewandten Oberfläche (14) der Wärmeenergieverluststelle (20) absinkt, wodurch der Temperaturunterschied zwischen den Oberflächentemperaturen an den beiden Oberflächen (12, 14) der Wärmeenergieverluststelle (20) verringert wird, und dass
die Strömung des ausströmenden Raummediums zur Schaffung einer Wärmeaustauschstrecke über eine weite Winkelstrecke neben dem einströmenden Umgebungsmedium geführt wird.

2. Verfahren zur Versorgung eines Raums (R) mit einem Medium nach Anspruch 1, **dadurch gekennzeichnet, daß** zum Einströmen und Ausströmen des Mediums die thermisch bedingten Strömungsbewegungen des Mediums herangezogen werden.

3. Verfahren zur Versorgung eines Raums (R) mit einem Medium nach Anspruch 1 oder 2, **dadurch gekennzeichnet, daß** das Ein- und/oder Ausströmen des Mediums mechanisch oder elektromechanisch unterstützt erfolgt.

4. Verfahren zur Versorgung eines Raums (R) mit einem Medium nach einem der Ansprüche 1 bis 3, **dadurch gekennzeichnet, daß** die Richtung des einströmenden Umgebungsmediums und die Richtung des ausströmenden Raummediums einander entgegengesetzt sind.

5. Verfahren zur Versorgung eines Raums (R) mit einem Medium nach einem der Ansprüche 1 bis 3, **dadurch gekennzeichnet, daß** die Richtung der einströmenden Umgebungsluft parallel zur Richtung der ausströmenden Raumluft verläuft.

6. Verfahren zur Versorgung eines Raums (R) mit einem Medium nach einem der Ansprüche 1 bis 3, **dadurch gekennzeichnet, daß** die Einströmrichtung der Umgebungsluft die Ausströmrichtung Raumluft durchkreuzt.

7. Verfahren zur Versorgung eines Raums (R) mit einem Medium nach einem der Ansprüche 1 bis 6, wobei aus dem Raum (R) durch Konvektion und Wärmeleitung und/oder Undichtigkeiten an der Wärmeenergieverluststelle (20) Wärmeenergie an die Umgebung (U) abgegeben wird.

8. Verfahren zur Versorgung eines Raums (R) mit einem Medium nach einem der Ansprüche 1 bis 7, **dadurch gekennzeichnet, daß** die Umgebung (U) einem zweiten Raum entspricht, die Umgebungstemperatur (TU) eine zweite Raumtemperatur ist und die Wärmeenergieverluststelle (20) sich in einer Abtrennung (10) zwischen den beiden Räumen befindet.

9. Verfahren zur Versorgung eines Raums (R) mit einem Medium nach einem der Ansprüche 1 bis 8, **dadurch gekennzeichnet, daß** das Medium Luft ist.

10. Vorrichtung zur Durchführung eines Verfahrens nach einem der Ansprüche 1 bis 9, mit einer oberhalb der Wärmeenergieverluststelle (20) angeordneten Mediumaustauschvorrichtung (40) mit einer Mediumsammelvorrichtung (30), die aufweist:
eine zur Oberfläche (12) der Wärmeenergieverluststelle (40) hin ausgerichtete Umgebungsmediumeinlaßöffnung (31), durch welche das aufsteigende Umgebungsmedium eintritt,
einen Umgebungsmediumführungskanal (32), in dem das in die Mediumsammelvorrichtung eingetretene Umgebungsmedium gesammelt und weitergeführt wird,
eine Umgebungsmediumauslaßöffnung (33), aus welcher das im Umgebungsmediumführungskanal (32) geführte Umgebungsmedium in den Raum (R) abgebbar ist,
eine Raummediumeinlaßöffnung (34), durch welche ein Teil des Raummediums eintritt,
einen Raummediumführungskanal (35), der zumindest abschnittsweise zur Erzeugung eines Wärmeaustauschs in der Nähe des Umgebungsmediumführungskanals (32) verläuft und in welchem das eingetretene Raummedium geführt wird, sowie
eine Raummediumauslaßöffnung (36), aus welcher das geführte Raummedium an die Umgebung (U) abgegeben wird, **dadurch gekennzeichnet, dass**
der Umgebungsmediumführungskanal (32) von der der Umgebung zugewandten Oberfläche der Wärmeenergieverluststelle (20) hin ausgerichteten Eintrittsöffnung (31) bogenförmig zu der der dem Raum zugewandten Oberfläche der Wärmeenergieverluststelle (20) hin ausgerichteten Austrittsöffnung (33) derart verläuft, daß das einströmende Medium in einem Grenzbereich entlang der dem Raum (R) zugewandten Oberfläche (14) der Wärmeenergieverluststelle (20) absinkt, wodurch der Temperaturunterschied zwischen den Oberflächentemperaturen an den beiden Oberflächen (12, 14) der Wärmeenergieverluststelle (20) verringert wird, und dass der Raummediumführungskanal (35) zur Schaffung einer Wärmeaustauschstrecke über eine weite Winkelstrecke neben dem Umgebungsmediumführungskanal (32) verläuft.

11. Vorrichtung nach Anspruch 10, mit einer Fördereinrichtung (50), durch die die Führung des Mediums im Umgebungsmediumführungskanal (32) und/oder Raummediumführungskanal (35) erfolgt.

12. Vorrichtung nach Anspruch 10 oder 11, **dadurch gekennzeichnet, daß** die Mediumsammelvorrichtung (30) einen zusätzlichen Wärmetauscher bzw. eine zusätzliche entsprechend arbeitende Wärmeaustauscheinrichtung aufweist.

13. Vorrichtung nach Anspruch 12, **dadurch gekennzeichnet, daß** der Wärmetauscher ein Gegenstromwärmetauscher ist.

14. Vorrichtung nach Anspruch 12, **dadurch gekennzeichnet, daß** der Wärmetauscher ein Gleichstromwärmetauscher ist.

15. Vorrichtung nach Anspruch 12, **dadurch gekennzeichnet, daß** der Wärmetauscher ein Kreuzstromwärmetauscher ist.

16. Vorrichtung nach einem der Ansprüche 10 bis 15, die desweiteren eine Steuervorrichtung zur Aktivierung bzw. Deaktivierung der Mediumaustauschvorrichtung (40) in Abhängigkeit von Zustandsparametern des Umgebungsmediums und/oder des Raummediums aufweist.

17. Vorrichtung nach Anspruch 16, **dadurch gekennzeichnet, daß** die Aktivierung der Mediumaustauschvorrichtung (40) intermittierend erfolgt.

18. Vorrichtung nach Anspruch 17, **dadurch gekennzeichnet, daß** die Aktivierung der Mediumaustauschvorrichtung (40) kontinuierlich erfolgt.

19. Vorrichtung nach einem der Ansprüche 10 bis 18, **dadurch gekennzeichnet, daß** die Vorrichtung ein Modul ist.

20. Vorrichtung nach einem der Ansprüche 10 bis 19, **dadurch gekennzeichnet, daß** die Vorrichtung eine Raumbelüftungsvorrichtung ist.

21. Vorrichtung nach Anspruch 19, **dadurch gekennzeichnet, daß** das Modul in einem Rolladenkasten (70) integriert ist.

22. Vorrichtung nach Anspruch 19, **dadurch gekennzeichnet, daß** das Modul in einem Fenster- und/oder Türsturz (11) integriert ist.

23. Vorrichtung nach einem der Ansprüche 10 bis 22, **dadurch gekennzeichnet, daß** die Umgebungsmediumeinlaßöffnung und/oder die Raummedium-Auslaßöffnung sich im wesentlichen über die gesamte Breite (B) der Wärmeenergieverluststelle erstrecken.

## Claims

1. A method for supplying a medium of a particular quality to a room (R), wherein a partition (10) including a location of heat energy loss (20) is located between said room (R) in which a room medium having a room temperature (TR) is present, and an environment (U) in which an environmental medium having a environmental temperature (TU) lower in comparison with the room temperature is present, said method comprising the following steps:
heating said environmental medium adjacent said location of heat energy loss (20) by heat energy discharged from said room (R) to said environment (U) via said location of heat energy loss (20), to a first temperature (T1) which is higher than said environmental temperature (TU), so that said heated environmental medium rises along a surface (12) of said location of heat energy loss (20) facing said environment,
collecting said environmental medium rising along said surface (12) of said location of heat energy loss (20) in a medium collecting means (30) arranged above said location of heat energy loss (20),
causing said environmental medium collected in said medium collecting means (30) and having a second temperature (T2) which is lower than said room temperature (TR), to flow into said room (R),
distributing said environmental medium having flowed into said room (R) within said room medium present in said room (R), and blending it with the latter,
causing part of said room medium present in said room (R) and having a third temperature (T3), to flow out to said environment (U) via said medium collecting means (30),
exchanging heat energy between said environmental medium collected in said medium collecting means (30) and room medium flowing out of said room (R), said third temperature (T3) being higher than said first (T1) and second (T2) temperatures,
**characterized in that**
the flow of said inflowing environmental medium from said entry opening (31) which is oriented towards that surface of said location of heat energy loss (20) facing said environment is arcuately guided towards said exit opening (33) which is oriented towards that surface of said location of heat energy loss (20) facing said room (R), so that said inflowing medium sinks down in a limit range along said surface (14) of said location of heat energy loss (20) facing said room (R), whereby the temperature difference between the surface temperatures at said two surfaces (12, 14) of said location of heat energy loss (20) is reduced, and **in that**
the flow of said outflowing room medium is guided over a wide angular distance adjacent said inflowing environmental medium so as to create a heat exchange path.

2. The method for supplying a medium to a room (R) according to claim 1, **characterized in that** the thermally engendered flow movements of said medium are made use of to cause inflow and outflow of said medium.

3. The method for supplying a medium to a room (R) according to claim 1 or 2, **characterized in that** said flowing in and/or out of said medium takes place with mechanical or electro-mechanical support.

4. The method for supplying a medium to a room (R) according to any one of claims 1 to 3, **characterized in that** the direction of said inflowing environmental medium and the direction of said outflowing room medium are opposite to each other.

5. The method for supplying a medium to a room (R) according to any one of claims 1 to 3, **characterized in that** the direction of said inflowing environmental air is parallel to the direction of said outflowing room air.

6. The method for supplying a medium to a room (R) according to any one of claims 1 to 3, **characterized in that** the direction of inflow of said environmental air crosses the direction of outflow of said room air.

7. The method for supplying a medium to a room (R) according to any one of claims 1 to 6, wherein heat energy is discharged to said environment (U) from said room (R) by convection and heat conduction and/or leakages at said location of heat energy loss (20).

8. The method for supplying a medium to a room (R) according to any one of claims 1 to 7, **characterized in that** said environment (U) corresponds to a second room, said environmental temperature (TU) is a second room temperature, and said location of heat energy loss (20) is located in a partition (10) between said two rooms.

9. The method for supplying a medium to a room (R) according to any one of claims 1 to 8, **characterized in that** said medium is air.

10. Apparatus for implementing a method according to any one of claims 1 to 9, having a medium exchange device (40) arranged above said location of heat energy loss (20) and including a medium collecting means (30), said device comprising:
an environmental medium inlet opening (31) which is oriented towards said surface (12) of said location of heat energy loss (40), through which said rising environmental medium enters,
an environmental medium guide channel (32) in which said environmental medium having entered into said medium collecting means is collected and passed on,
an environmental medium outlet opening (33) from which said environmental medium guided in said environmental medium guide channel (32) may be discharged into said room (R),
a room medium inlet opening (34) through which part of said room medium enters,
a room medium guide channel (35) extending at least in portions thereof in the vicinity of said environmental medium guide channel (32) for generation of a heat exchange, in which said entered room medium is guided, as well as
a room medium outlet opening (36) from which said guided room medium is discharged to said environment (U),
**characterized in that**
said environmental medium guide channel (32) arcuately extends at said entry opening (31) which is oriented towards said surface of said location of heat energy loss (20) facing the environment, to said exit opening (33) which is oriented towards said surface of said location of heat energy loss (20) facing said room (R), so that said inflowing medium sinks down in a limit range along said surface (14) of said location of heat energy loss (20) facing said room (R), whereby the temperature difference between the surface temperatures at said two surfaces (12, 14) of said location of heat energy loss (20) is reduced, and **in that** said room medium guide channel (35) extends over a wide angular distance adjacent said environmental medium guide channel (32) so as to create a heat exchange path.

11. Apparatus according to claim 10, including a conveyor means (50) through which guiding said medium in said environmental medium guide channel (32) and/or room medium guide channel (35) is effected.

12. Apparatus according to claim 10 or 11, **characterized in that** said medium collecting means (30) include an additional heat exchanger or an additional heat exchange means of corresponding operation.

13. Apparatus according to claim 12, **characterized in that** said heat exchanger is a counterflow heat exchanger.

14. Apparatus according to claim 12, **characterized in that** said heat exchanger is a parallel-flow heat exchanger.

15. Apparatus according to claim 12, **characterized in that** said heat exchanger is a cross-flow heat exchanger.

16. Apparatus according to any one of claims 10 to 15, further including a control means for activating or deactivating said medium exchange device (40) depending on condition parameters of said environmental medium and/or of said room medium.

17. Apparatus according to claim 16, **characterized in that** activation of said medium exchange device (40) takes place intermittently.

18. Apparatus according to claim 17, **characterized in that** activation of said medium exchange device (40) takes place continuously.

19. Apparatus according to any one of claims 10 to 18, **characterized in that** said apparatus is a module.

20. Apparatus according to any one of claims 10 to 19, **characterized in that** said apparatus is a room ventilation apparatus.

21. Apparatus according to claim 19, **characterized in that** said module is integrated in a roller shutter case (70).

22. Apparatus according to claim 19, **characterized in that** said module is integrated in a window and/or door lintel (11).

23. Apparatus according to any one of claims 10 to 22, **characterized in that** said environmental medium inlet opening und/oder said room medium outlet opening substantially extends across the entire width (B) of said location of heat energy loss.

## Revendications

1. Procédé destiné à distribuer un fluide de qualité déterminée dans une pièce (R), une séparation (10) munie d'une zone de perte d'énergie thermique (20) étant formée entre la pièce (R), qui contient un fluide à une température de la pièce (TR), et un milieu extérieur (U), qui contient un fluide à une température du milieu extérieur (TU) inférieure à la température de la pièce (TR), comprenant les étapes suivantes :
le chauffage du fluide du milieu extérieur, adjacent à la zone de perte d'énergie thermique (20), au moyen de l'énergie thermique qui se dégage hors de la pièce (R) par l'intermédiaire de la zone de perte d'énergie thermique (20) vers le milieu extérieur (U), à une première température (T1), qui est supérieure à la température du milieu extérieur (TU), de telle sorte que le fluide du milieu extérieur chauffé remonte le long d'une surface (12) de la zone de perte d'énergie thermique (20), orientée vers le milieu extérieur ;
l'accumulation du fluide du milieu extérieur, qui remonte le long de la surface (12) de la zone de perte d'énergie thermique (20), dans un collecteur de fluide (30), disposé au-dessus de la zone de perte d'énergie thermique (20) ;
l'admission dans la pièce (R) du fluide du milieu extérieur accumulé dans le collecteur de fluide (30), qui présente une deuxième température (T2), qui est inférieure à la température de la pièce (TR) ;
la répartition du fluide du milieu extérieur, admis dans la pièce (R), dans le fluide contenu dans la pièce (R) et brassage avec celui-ci ;
l'évacuation d'une partie du fluide de la pièce, contenu dans la pièce (R) et présentant une troisième température (T3), vers le milieu extérieur (U) par l'intermédiaire du collecteur de fluide (30) ; et
l'échange d'énergie thermique entre le fluide du milieu extérieur accumulé dans le collecteur de fluide (30) et le fluide de la pièce qui se dégage hors de la pièce (R), la troisième température (T3) étant supérieure à la première température (T1) et à la deuxième température (T2),
**caractérisé en ce que**
le fluide du milieu extérieur entrant suit un trajet en forme de boucle à partir de l'orifice d'admission (31), dirigé vers la surface de la zone de perte d'énergie thermique (20) orientée vers le milieu extérieur, jusqu'à l'orifice de sortie (33) dirigé vers la surface de la zone de perte d'énergie thermique (20) orientée vers la pièce, de telle sorte que le fluide admis circule dans le sens descendant dans une zone limite le long de la surface (14) de la zone de perte d'énergie thermique (20), orientée vers la pièce (R), ce qui réduit la différence de température entre les températures au niveau des deux surfaces (12, 14) de la zone de perte d'énergie thermique (20), et
**en ce que** le flux du fluide de la pièce dégagé vers l'extérieur suit un long trajet coudé à côté du fluide du milieu extérieur entrant, en vue de créer un trajet avec échange thermique.

2. Procédé destiné à distribuer un fluide dans une pièce (R) selon la revendication 1, **caractérisé en ce que**, pour l'admission et l'évacuation du fluide, on tient compte des mouvements d'écoulement du fluide définis thermiquement.

3. Procédé destiné à distribuer un fluide dans une pièce (R) selon la revendication 1 ou 2, **caractérisé en ce que** l'admission et/ou l'évacuation du fluide sont favorisés par un processus mécanique ou électromécanique.

4. Procédé destiné à distribuer un fluide dans une pièce (R) selon une des revendications 1 à 3, **caractérisé en ce que** le sens d'admission du fluide du milieu extérieur et le sens d'évacuation du fluide de la pièce sont opposés l'un à l'autre.

5. Procédé destiné à distribuer un fluide dans une pièce (R) selon une des revendications 1 à 3, **caractérisé en ce que** le sens d'admission de l'air du milieu extérieur est parallèle au sens d'évacuation de l'air de la pièce.

6. Procédé destiné à distribuer un fluide dans une pièce (R) selon une des revendications 1 à 3, **caractérisé en ce que** le sens d'admission de l'air du milieu extérieur forme une intersection avec le sens d'évacuation de l'air de la pièce.

7. Procédé destiné à distribuer un fluide dans une pièce (R) selon une des revendications 1 à 6, dans lequel l'énergie thermique est dégagée hors de la pièce (R) vers le milieu extérieur (U) par convection et conduction de la chaleur et/ou par des inétanchéités dans la zone de perte d'énergie thermique (20).

8. Procédé destiné à distribuer un fluide dans une pièce (R) selon une des revendications 1 à 7, **caractérisé en ce que** le milieu extérieur (U) correspond à une deuxième pièce, la température du milieu extérieur (TU) constitue la température de la deuxième pièce et la zone de perte d'énergie thermique (20) est située dans une cloison (10) entre les deux pièces.

9. Procédé destiné à distribuer un fluide dans une pièce (R) selon une des revendications 1 à 8, **caractérisé en ce que** le fluide est de l'air.

10. Dispositif destiné à la mise en oeuvre d'un procédé selon une des revendications 1 à 9, comprenant un dispositif d'échange de fluide (40) disposé au-dessus de la zone de perte d'énergie thermique (20) et muni d'un collecteur de fluide (30), lequel dispositif comprend :
un orifice d'admission du fluide du milieu extérieur (31), dirigé vers la surface (12) de la zone de perte d'énergie thermique (20), à travers lequel est admis le fluide du milieu extérieur entrant dans le sens ascendant,
un canal de guidage du fluide du milieu extérieur (32), dans lequel s'accumule et circule le fluide du milieu extérieur admis dans le collecteur de fluide,
un orifice de sortie du fluide du milieu extérieur (33), à travers lequel le fluide du milieu extérieur acheminé dans le canal de guidage du fluide du milieu extérieur (32) est distribué dans la pièce (R),
un orifice d'admission du fluide de la pièce (34), à travers lequel est admis une partie du fluide de la pièce,
un canal de guidage du fluide de la pièce (35), qui s'étend au moins dans certaines parties à proximité du canal de guidage du fluide du milieu extérieur (32) pour produire un échange thermique et dans lequel circule le fluide de la pièce admis, et
un orifice de sortie du fluide de la pièce (36), à travers lequel le fluide de la pièce acheminé est évacué vers le milieu extérieur (U),
**caractérisé en ce que** le canal de guidage du fluide du milieu extérieur (32) s'étend en forme de boucle à partir de l'orifice d'admission (31), dirigé vers la surface de la zone de perte d'énergie thermique (20) orientée vers le milieu extérieur, jusqu'à l'orifice de sortie (33) dirigé vers la surface de la zone de perte d'énergie thermique (20) orientée vers la pièce, de telle sorte que le fluide admis circule dans le sens descendant dans une zone limite le long de la surface (14) de la zone de perte d'énergie thermique (20), orientée vers la pièce (R), ce qui réduit la différence de température entre les températures au niveau des deux surfaces (12, 14) de la zone de perte d'énergie thermique (20), et **en ce que** le canal de guidage du fluide de la pièce (35) s'étend sur un long trajet coudé à côté du canal de guidage du fluide du milieu extérieur (32), en vue de créer un trajet avec échange thermique.

11. Dispositif selon la revendication 10, comprenant un dispositif de transport (50), par lequel le fluide est acheminé dans le canal de guidage du fluide du milieu extérieur (32) et/ou le canal de guidage du fluide de la pièce (35).

12. Dispositif selon la revendication 10 ou 11, **caractérisé en ce que** le collecteur de fluide (30) comprend un échangeur thermique supplémentaire ou une unité d'échange thermique supplémentaire fonctionnant de manière correspondante.

13. Dispositif selon la revendication 12, **caractérisé en ce que** l'échangeur thermique est un échangeur thermique à contre-courant.

14. Dispositif selon la revendication 12, **caractérisé en ce que** l'échangeur thermique est un échangeur thermique avec écoulement dans le même sens.

15. Dispositif selon la revendication 12, **caractérisé en ce que** l'échangeur thermique est un échangeur thermique à courants croisés.

16. Dispositif selon une des revendications 10 à 15, qui comprend, par ailleurs, un dispositif de commande destiné à activer ou désactiver le dispositif d'échange de fluide (40) en fonction des paramètres d'état du fluide du milieu extérieur et/ou du fluide de la pièce.

17. Dispositif selon la revendication 16, **caractérisé en ce que** le dispositif d'échange du fluide (40) est activé par intermittence.

18. Dispositif selon la revendication 17, **caractérisé en ce que** le dispositif d'échange du fluide (40) est activé en continu.

19. Dispositif selon une des revendications 10 à 18, **caractérisé en ce que** le dispositif est un module.

20. Dispositif selon une des revendications 10 à 19, **caractérisé en ce que** le dispositif est un dispositif de ventilation d'une pièce.

21. Dispositif selon la revendication 19, **caractérisé en ce que** le module est intégré dans un coffre de volet roulant (70).

22. Dispositif selon la revendication 19, **caractérisé en ce que** le module est intégré dans le linteau d'une fenêtre et/ou le linteau d'une porte (11).

23. Dispositif selon une des revendications 10 à 22, **caractérisé en ce que** l'orifice d'admission du fluide du milieu extérieur et/ou l'orifice de sortie du fluide de la pièce s'étendent sensiblement sur toute la largeur (B) de la zone de perte d'énergie thermique.
